# EUROPEAN PATENT APPLICATION

(11) **EP 1 418 516 A2**
(43) Date of publication of application: **12.05.2004**
(21) Application number: 03011842.6
(22) Date of filing: 26.05.2003
(51) Int. Cl.: G06F 17/60

(54) **Method for controlling image information**

(30) Priority: 08.11.2002 JP 2002325445
(71) Applicant: Hitachi, Ltd., Chiyoda-ku, Tokyo 101-8010 (JP)
(72) Inventor: Miyazaki, Shuichi, Hitachi Ltd, Int Property Group, Chiyoda-ku, Tokyo 100-8220 (JP)
(74) Representative: Strehl Schübel-Hopf & Partner

(57) **Abstract**

An image information controlling method for acquiring image information (65) from each of portable terminals (30, 40) and controlling the image information (65) by a server (15), wherein the server (15) is made to execute the steps of: receiving the image information (65) from each of the portable terminals (30, 40), the image information (65) being associated with an image pick-up attribute including information of at least a terminal identifier (62) selected from the group consisting of an image pick-up position (63), a time (64) and the terminal identifier (62) (Step 1202); storing the received image information (65) in an image database (13) (Step 1211, Step 1214); recording a frequency of storage of the image information (65) or a context of use of the image information (65) by others in a use context database (13, 14); and reducing a use amount of each of the portable terminals (30, 40), which are sources of the image information (65), in accordance with the frequency of storage or the context of use in the use context database (13, 14) (Step 1218, Step 1507, Step 1601, Step 1701).

## Description

### BACKGROUND OF THE INVENTION

The present invention relates to a technique for controlling information including images. It particularly relates to control of information transmitted/received through a network including the Internet.

Nowadays, various digital contents such as games, music, writings, images, etc., are distributed on networks, mainly on the Internet. In such a contents distribution service, there are an operation method in which a value is added to the content itself and a price therefor is requested of a user, and an operation method in which it is intended to gain a price in connection with clicking of an additional advertisement or purchase of a commodity while the contents are provided free of charge as means for securing users. For example, there is also proposed a method for providing a contents distribution service in accordance with desires of users such as a desire to view only contents without viewing any additional advertisement, a desire to increase additional advertisement to thereby make the charge for delivery of contents as cheap as possible, etc. The details of this method are described in JP-A-2002-222368.

### SUMMARY OF THE INVENTION

That is, service methods for distributing contents such as image information etc. to users have been devised variously and practically realized on the Internet, etc. On the other hand, no proposal has been however made on a business method, for example, for broadly collecting image information from the public and using the image information as distribution contents. Accordingly, there is a problem that it is difficult to collect image contents necessary for a service for distributing image information etc. because a system for paying an information provision fee or granting some reward to the image provider who has provided the image information has not been established yet.

The present invention was therefore developed under the above-mentioned circumstances, and an object of the present invention is to provide an image information controlling method, system and program and a recording medium by which image information can be collected easily and efficiently.

In order to achieve the aforementioned object, the image information controlling method according to the present invention is a method for acquiring image information from each of portable terminals and controlling the image information by a server, wherein the server includes the steps of: receiving the image information from each of the portable terminals, the image information being associated with an image pick-up attribute including information of at least a terminal identifier selected from the group consistinq of an image pick-up position, a time and the terminal identifier; storing the received image information in an image database; recording a frequency of storage of the image information or a context of use of the image information by others in a use context database; and reducing a use amount of each of the portable terminals, which are sources of the image information, in accordance with the frequency of storage or the context of use in the use context database.

In addition, the problem disclosed in this application and the solution method to the problem will become clear from the embodiment of the present invention and with reference to the drawings.

### BRIEF DESCRIPTION OF THE DRAWINGS

Fig. 1 is a view of the configuration of a network including an image information controlling system according to an embodiment;
Fig. 2 is a view showing an example of a mode for acquiring image information according to the embodiment;
Fig. 3 is a diagram showing an example of the configuration of each of camera-including portable telephones;
Fig. 4 is a view showing an example of a packet format sent out from the camera-including portable telephone;
Fig. 5 is a view showing an example of the relation between transition of an image pick-up position and the latitude and longitude;
Fig. 6 is a view showing examples of packets by image pick-up position based on one and the same camera-including portable telephone;
Fig. 7 is a diagram showing an example of the configuration of an image server;
Fig. 8 is a diagram showing an example of the configuration of an accounting server;
Fig. 9 is a view showing a storage mode of received packets in an image database;
Fig. 10 is a view showing an example of a distribution of image pick-up positions for each camera-including portable telephone;
Fig. 11 is a view showing a mode of sending out a transmission packet from the image database;
Fig. 12 is a flow chart showing Example 1 of a practical procedure of an image information controlling method;
Fig. 13 is a flow chart showing an example of a procedure of processing of a camera-designated information distribution service, that is, Processing 2;
Fig. 14 is a flow chart showing an example of a procedure of processing of a region-based information distribution service, that is, Processing 3;
Fig. 15 is a flow chart showing Example 2 of the procedure of the image information controlling method;
Fig. 16 is a flow chart showing an example of a procedure of discount processing in accordance with upload, that is, Processing 1;
Fig. 17 is a flow chart showing an example of a procedure of discount processing in accordance with download, that is, Processing 4; and
Fig. 18 is a table showing an example of the data structure of an accounting database.

### DESCRIPTION OF THE EMBODIMENTS

From description of the specification, at least the following facts will become clear.

In the image information controlling method, the step of reducing the use amount of each of the portable terminals may further include the steps of: acquiring accounting information of each of the portable terminals from an accounting database for storing accounting information by portable terminal; and comparing the use amount included in the acquired accounting information with a reduction amount to be deducted from the use amount; and applying the reduction amount so as to deduct the reduction amount from the use amount when the use amount of each of the portable terminals is larger than the reduction amount as a result of the comparison.

In addition, in the image information controlling method, electronic money or points may be granted to each of the portable terminals in place of the reduction of the use amount.

Further, the image information controlling method may further include the steps of: recording a storage operation attribute including either time or communication cost required for storing the image information, or a carrier attribute of each of the portable terminals in the use context database; and reducing the use amount of each of the portable terminals, which are sources of the image information, in accordance with the storage operation attribute or the carrier attribute in the use context database.

In addition, according to the present invention, the image information controlling method may further include the steps of: acquiring information of portable terminals present in image pick-up positions proper to an image pick-up attribute in response to an image pick-up request from a user including designation of the image pick-up attribute on the basis of a service of acquiring position information of the portable terminals; designating a portable terminal proper to the image pick-up attribute on the basis of the acquired information and transmitting an image pick-up request to the designated portable terminal; receiving image information sent back from the portable terminal in response to the image pick-up request and storing the image information in the image database; and providing the image information to a terminal of the user.

Further, according to the present invention, there is provided an image information controlling system for acquiring image information from each of portable terminals and controlling the image information, including: means for receiving the image information from each of the portable terminals, the image information being associated with an image pick-up attribute including information of at least a terminal identifier selected from the group consisting of an image pick-up position, a time and the terminal identifier; means for storing the received image information in an image database; means for recording a frequency of storage of the image information or a context of use of the image information by others in a use context database; and means for reducing a use amount of each of the portable terminals, which are sources of the image information, in accordance with the frequency of storage or the context of use in the use context database.

Further, according to the present invention, there is provided an image information controlling program for making a computer execute a method of acquiring image information from each of portable terminals and controlling the image information, including the steps of: receiving the image information from each of the portable terminals, the image information being associated with an image pick-up attribute including information of at least a terminal identifier selected from the group consisting of an image pick-up position, a time and the terminal identifier; storing the received image information in an image database; recording a frequency of storage of the image information or a context of use of the image information by others in a use context database; and reducing a use amount of each of the portable terminals, which are sources of the image information, in accordance with the frequency of storage or the context of use in the use context database.

Further, it is possible to form a computer-readable recording medium for recording the image information controlling program.

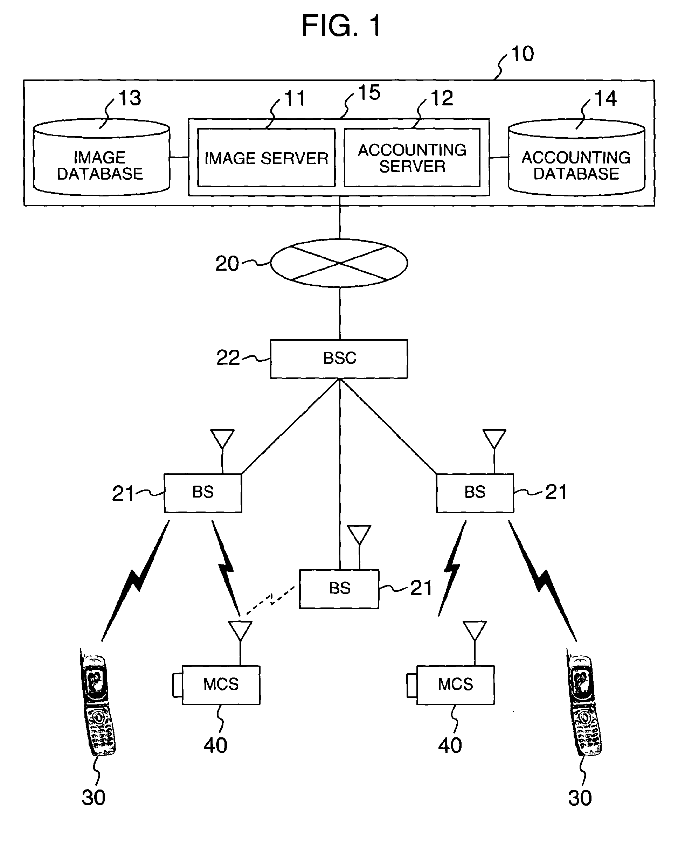

An embodiment of the present invention will be described below in detail with reference to the drawings. Fig. 1 is a view of the configuration of a network including an image information controlling system according to the embodiment. An image information controlling system 10 (hereinafter referred to as "system 10") is constituted by a server 15, an image database 13 and an accounting database 14. The server 15 includes an image server 11 and an accounting server 12, which are provided with the image database 13 and the accounting database 14 respectively.

The server 15 is provided, for example, in a company offering an image information distribution service, and controlled and operated by the company. Further, to the server 15, added is a communication device which is connected to any one of various networks 20 such as the Internet, an intranet, a public line network, etc., so as to perform data communication in conformity with the protocol of the network. The server 15 performs data communication with camera-including portable telephones 30, mobile camera terminals 40, etc. through the communication device so as to acquire information of images picked up by users of the terminals 30 and 40 or so as to distribute information of images to the terminals.

In the embodiment, a portable telephone network constructed by carriers of the camera-including portable telephones 30 is adopted in order to surely acquire image information from the camera-including portable telephones 30 and the mobile camera terminals 40 scattered over various places. That is, any one of the camera-including portable telephones 30 and the mobile camera terminals 40 gains access to the nearest one of base stations 21 in the portable telephone network and is connected to the network 20 through a base station center 22 controlling the base stations 21. It is a matter of course that the mode of the present invention is not limited to the above-mentioned embodiment using the portable telephone network, but may be applicable to any communication mode if it allows the server 15 to transmit/receive image information to/from each of the camera-including portable telephones 30 or each of the mobile camera terminals 40.

Incidentally, the present invention is not limited to the case where the image server 11, the accounting server 12, the image database 13 and the accounting database 14 constituting the system 10 are provided exclusively in the company offering an image information distribution service. For example, the present invention may be applicable to the case where one company for collecting and providing image information operates the image server 11 and the image database 13 while another company for performing only accounting processing concerning transmission/reception of the image information operates the accounting server 12 and the accounting database 14.

In addition, the server 15 stores image information received from each camera-including portable telephone 30 or each mobile camera terminal 40 in the image database 13 in consideration of the identifier, the image pick-up position, the image pick-up time, etc. of the terminal 30 or 40. Together with the storage operation, the server 15 updates the upload count of image information from the terminal 30 or 40 in the accounting database 14. That is, a provider of image information increases its own degree of courtesy whenever the provider stores the image information in the server 15. For example, the degree of courtesy may be an amount of discount to be deducted from the telephone call charge of the camera-including portable telephone 30, or electronic money or points allowable for commodity/service purchase.

On the other hand, when information of an image stored in the image database 13 is downloaded by any other person, the download count of the corresponding image information provider in the accounting database 14 is updated in response to the downloading. That is, the degree of courtesy of the image information provider is increased whenever the image information is used by any other person.

Incidentally, the server 15 serves as a firewall server for preventing illegal hacking from the outside. The server 15 may also have a function as a WWW server and a function as a mail server for making communication with data communication objects.

In addition, the present invention is not limited to the example where the image database 13 and the accounting database 14 are provided integrally in the system 10, but may be applied to the case where the image database 13 and the accounting database 14 are operated together through a network while being added to different pieces of apparatus. In addition, a use context database for recording the frequency of storage of image information and the context of use of the stored image information by others may be included in the image database 13 or the accounting database 14 (for example, in the embodiment, the use context database is included in the accounting database 14).

Further, besides the Internet, any other network such as a WAN (Wide Area Network), a LAN, a private line, a home powerline network, a wireless network, a public line network, a portable telephone network, or the like, may be adopted as the network for connecting the server 15, the image database 13, the accounting database 14, the camera-including portable telephones 30 and the mobile camera terminals 40 with one another. When a virtual private network (VPN) technique or the like is used, communication having a higher security level over the Internet is established preferably.

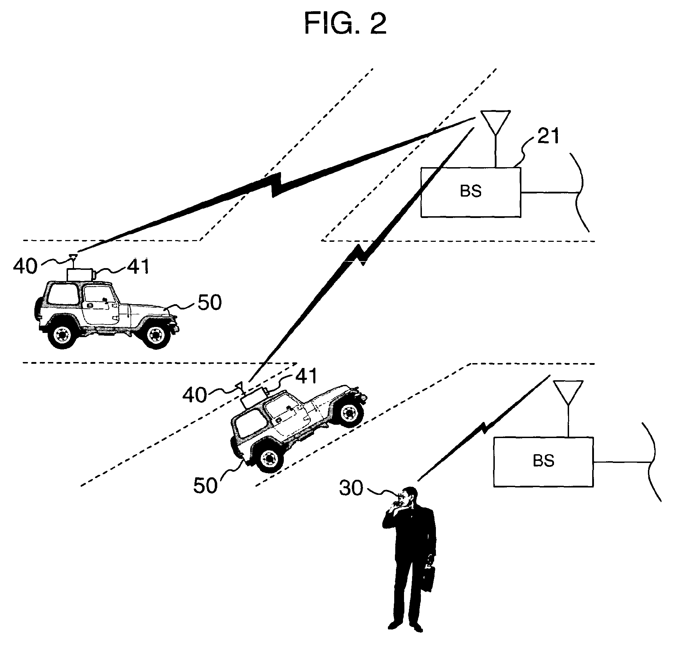

Fig. 2 is a view showing an example of a mode for acquiring image information according to the embodiment. There can be expected various situations for picking up an image. For example, as shown in the drawing, a mobile camera terminal 40 is mounted on each of vehicles 50, and images of scenery during running are picked up by a camera 41 provided in the mobile camera terminal 40. Information of the picked-up images is transmitted to the server 15 through corresponding one of the base stations 21. Further, information of images picked up with camera-including portable telephones 30 by persons carrying the camera-including portable telephones 30 with themselves is transmitted to the server 15 through the base stations 21. When such image information is transmitted, a transmission mode of attaching the image information to a piece of mail may be adopted.

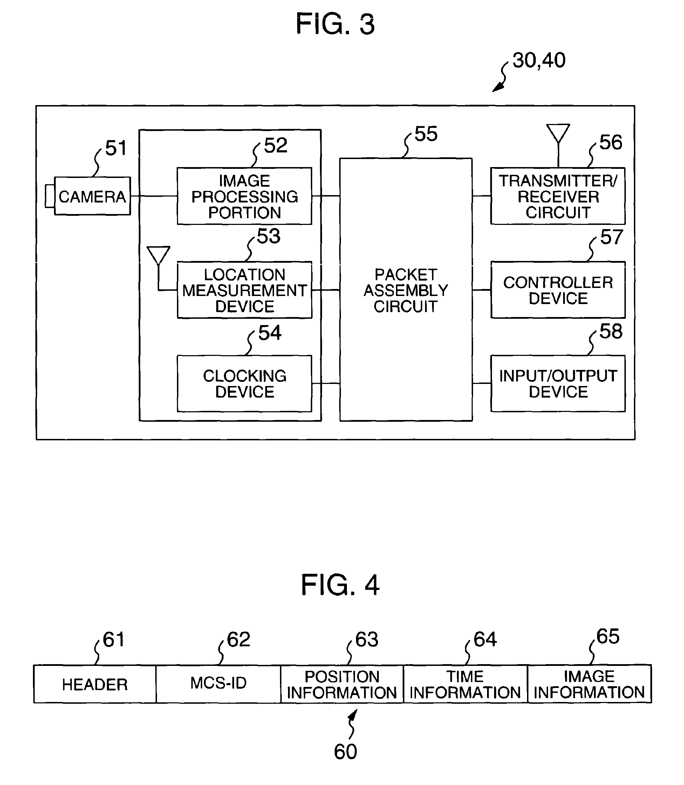

Fig. 3 is a diagram showing an example of the configuration of each of the camera-including portable telephones 30. Fig. 4 is a view showing an example of a packet format sent out from the camera-including portable telephone 30. The camera-including portable telephones 30 and the mobile camera terminals 40 are connected to the server 15 through the network 20. These terminals are possessed by information providers who provide information of images to the server 15, and the information of images picked up by the information providers are sent to the server 15 through the terminals 30 and 40.

On the other hand, in exchange for provision of the image information, or use of the provided images by others, the server 15 gives discounts for telephone call charges, points, electronic money, or the like. When a so-called reward is granted on the basis of each provided image in such a manner, it can be said that motivation of the image information providers to provide image information is enhanced.

In terms of structure of each terminal 30, 40, the terminal 30, 40 includes: a camera 51 for picking up an image; an image processing portion 52 for processing data of the image from the camera 51; a location measurement device 53 using a GPS function or the like for acquiring information of the position of the terminal 30, 40; and a clocking device 54 for detecting the time of picking up the image. The terminal 30, 40 further includes: a packet assembly circuit 55 for forming a packet on the basis of the image data, the position information and the time information; a transmitter/receiver circuit 56 for performing various data communications including transmission/reception of the packet; and a controller device 57 for controlling the terminal 30, 40. In addition, the terminal 30, 40 includes an input/output device 58 such as various keys, a touch panel and a display.

The configuration of a packet 60 generated by the packet assembly circuit 55 is shown in Fig. 4 as follows. The packet 60 is constituted by a header portion 61, a terminal identifier portion 62 (referred to as "MCS-ID"), a position information field 63 indicating latitude and longitude, a time information field 64 and an image information field 65. The server 15 having received such packets 60 buffers the packets 60 and properly restores the packets 60 in conformity with the protocol.

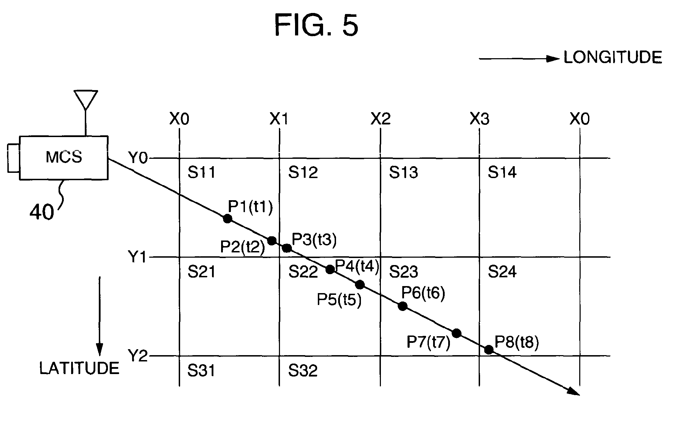

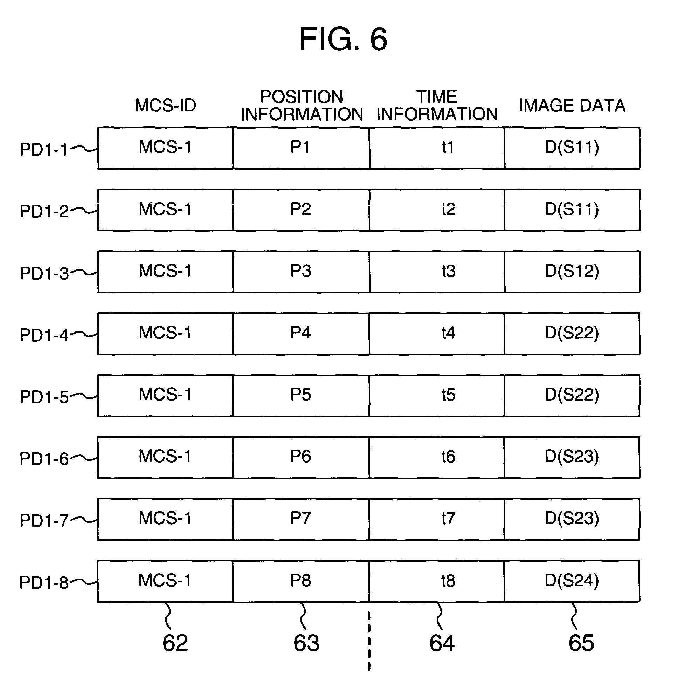

Fig. 5 is a view showing an example of the relation between the transition of the image pick-up position and the latitude and longitude. Fig. 6 is a view showing examples of packets by image pick-up position based on one and the same camera-including portable telephone. For example, latitude/longitude data including position information of respective packets 60 (PD1-1 to PD1-8 in the drawing) transmitted from the same terminal 30, 40 are checked with regions S00 to Snn (S11, S12, S13, S14, S21, S22, S23, and S24 in Fig. 5) defined by predetermined latitudes and longitudes respectively. Hence, each of the packets 60 is classified in accordance with the region where the packet 60 was picked up. In this case, it is a matter of course that processing such as excluding a duplicated image, or allowing information of images picked up at a fixed point contrariwise can be performed also in consideration of the image pick-up time.

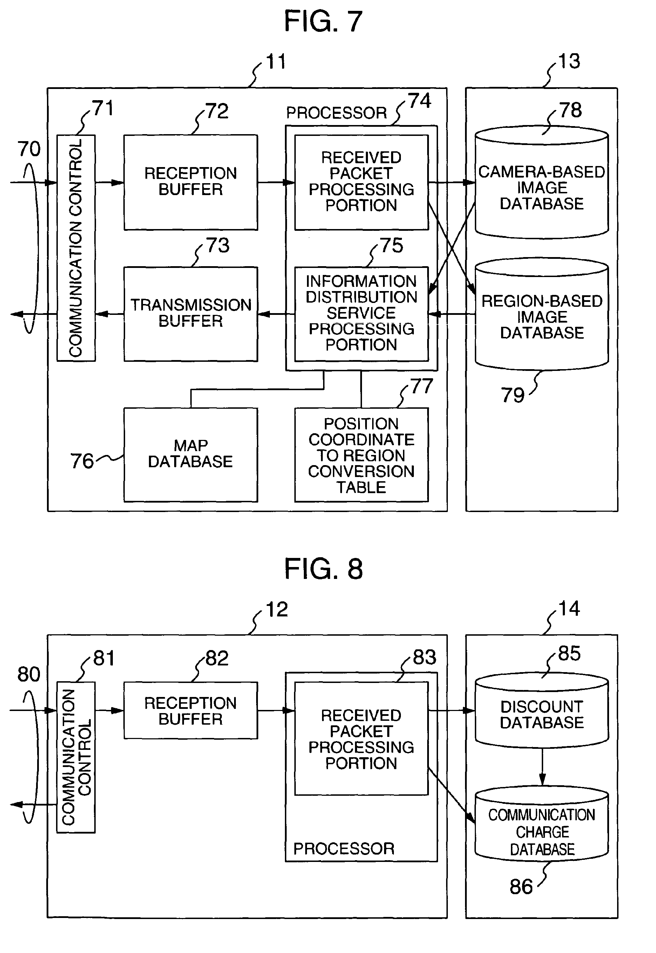

Fig. 7 is a diagram showing an example of the configuration of the image server. The image server 11 receives the packets 60 transmitted from the camera-including portable telephone 30 or the mobile camera terminal 40, and restores and stores the image information. On the other hand, the image server 11 also provides an information distribution service for providing image information stored in the image database 13.

To this end, the image server 11 includes a communication control portion 71 for performing transmission/reception 70 of packets, a reception buffer 72 and a transmission buffer 73 for buffering the packets 60, and a received packet processing portion 74 and an information distribution service processing portion 75 for performing restoration and generation processing of the packets 60 received and the packets 60 to be transmitted.

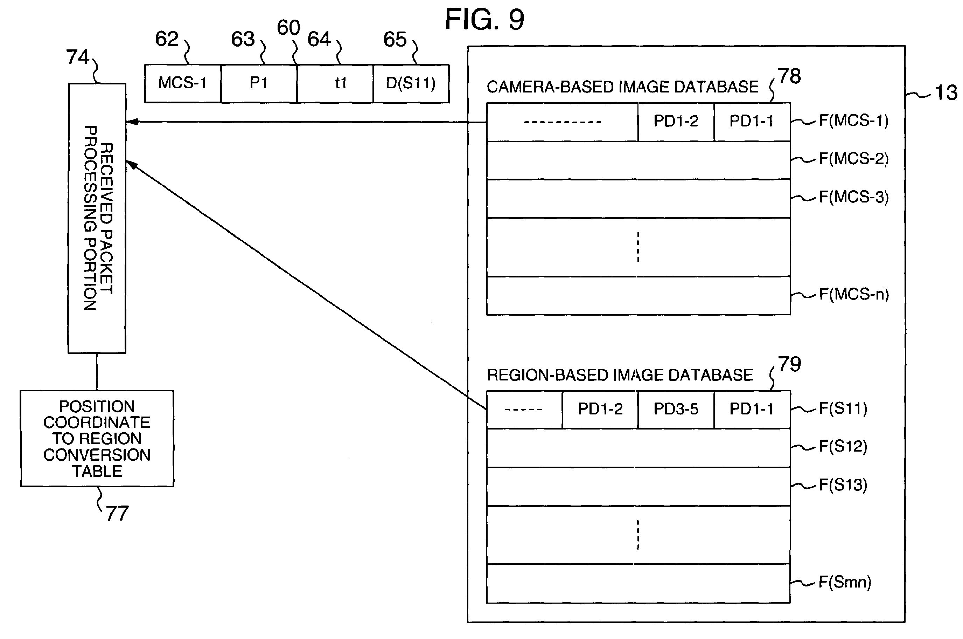

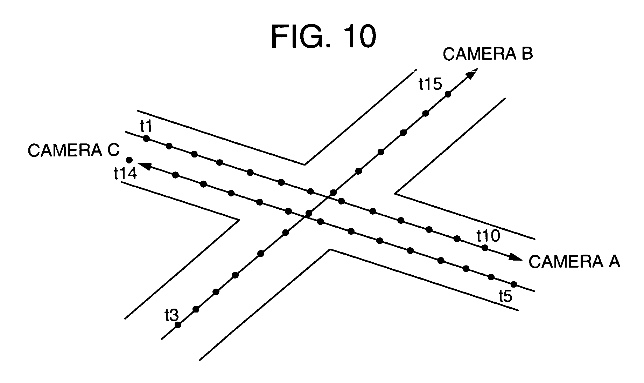

Further, in order to identify an image pick-up position from position information included in a packet 60, the image server 11 also includes a map database 76 and a position coordinate to region conversion table 77. A procedure is taken so that a region is identified based on latitude and longitude coordinates and indicated on the map. As shown in Fig. 9, each packet 60 received in the received packet processing portion 74 is checked with the position coordinate to region conversion table 77 so that the region where the image was picked up is identified and the image pick-up terminal is identified based on its terminal identifier 62. The packet 60 is then stored in a camera-based image database 78, and a region-based image database 79 respectively. To specify an image pick-up terminal, a terminal in a proper image pick-up position may be extracted from a plurality of terminals (cameras in the drawing) so that an image picked up by the extracted terminal is acquired, as shown in Fig. 10.

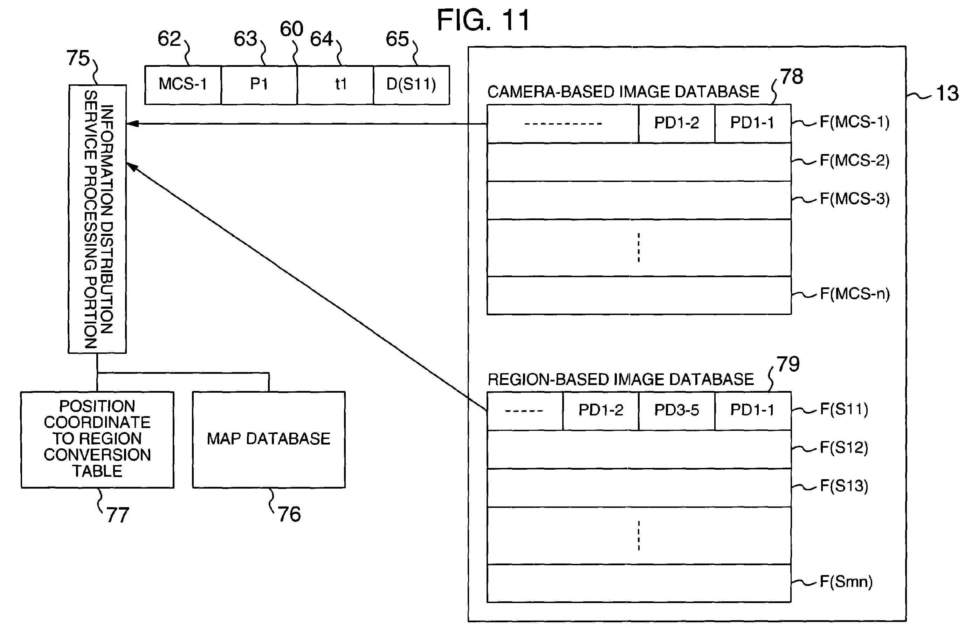

On the other hand, when image information is distributed, the information distribution service processing portion 75 generates a packet 60 based on the image information stored in the camera-based image database 78 and the region-based image database 79, distributes the packet 60, as shown in Fig. 11.

As described above, such an image server 11 is provided with the image database 13. The image database 13 has storage areas classified based on terminals or regions by or in which images were picked up as information, for example, in the form of the camera-based image database 78 or the region-based image database 79.

Fig. 8 is a diagram showing an example of the configuration of the accounting server. The accounting server 12 executes processing of discounting the telephone call charge of the image information provider in question (or merely updates the discount rate) whenever image information is acquired from the camera-including portable telephone 30 or the mobile camera terminal 40 of the image information provider or whenever the image information is used by any other person.

To this end, the accounting server 12 includes a communication control portion 81 for performing transmission/reception 80 of packets, a reception buffer 82 for buffering packets 60 and a received packet processing portion 83 for performing processing of restoring the received packets 60. As described above, the accounting server 12 is also provided with the accounting database 14. The accounting database 14 has storage areas classified, for example, in the form of a discount database 85, and a communication charge database 86 for recording the telephone call charges of the camera-including portable telephones 30.

Incidentally, besides a camera-including portable telephone, each of the camera-including portable telephones 30 and the mobile camera terminals 40 may be a device having a computer chip connectable to a network, such as a network-connectable PDA, a network-connectable game machine, a network-connectable portable TV, or the like, as long as the device has operational throughput, a communication function, and an image pick-up function which are required of each terminal.

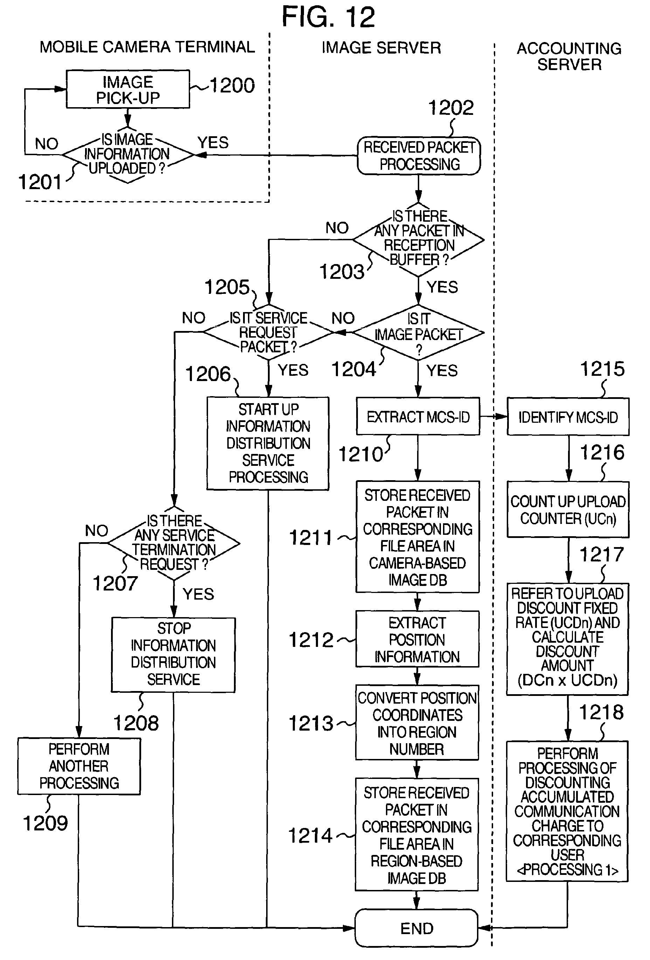

Fig. 12 is a flow chart showing Example 1 of a practical procedure of an image information controlling method. Description will be given to the practical procedure of the image information controlling method according to the present invention as follows. Assume that a mobile camera terminal 40 picks up an image of an object (Step 1200), and obtains information of the image. In the case where the image information is uploaded (YES in Step 1201), description will be started at the processing for the image server 11 to receive the image information. The image server 11 receives a packet 60 constituting the image information (Step 1202).

When it is confirmed that the packet is present in the reception buffer 72 (YES in Step 1203), it is judged whether the packet is an image packet or not. When no packet is present in the reception buffer 72 (NO in Step 1203), or when the packet in the buffer 72 is not an image packet (NO in Step 1204), it is judged whether there is a service request packet or not (Step 1205). For example, it is also possible to judge whether the user of the mobile camera terminal 40 desires to receive an information distribution service or the like instead of intending to store image information.

When the packet is a service request packet (Step 1206), the information distribution service processing is started up (Step 1206) so that, for example, menu screen data or the like for the information distribution service is sent back to the movable camera terminal 40. On the other hand, when the packet is not a service request packet (NO in Step 1205), judgment is made as to whether it includes a service termination request or not. If it includes a termination request, processing of stopping the information distribution service is carried out (Step 1208). When it does not include a termination request (NO in Step 1207), another processing is carried out (Step 1209).

On the other hand, when it is an image packet in Step 1204 (YES in Step 1204), a terminal identifier "MCS-ID" is extracted (Step 1210). Thus, the terminal having picked up the image is identified as one of the mobile camera terminals 40. The packet is then stored in a file area corresponding to the identified mobile camera terminal 40 in the camera-based image database 78 (Step 1211).

Position information included in the packet is also acquired (Step 1212). The position information is checked with the map database 76 and the position coordinate to region conversion table 77. Thus, the position coordinates included in the position information (e.g. latitude and longitude) are converted into a region number (e.g. one of S11 to S24, etc. shown in Fig. 5). When the region is identified, the packet is stored in a file area corresponding to the identified region in the region-based image database 79 (Step 1214) and the processing is then completed.

On the other hand, the terminal identifier extracted in Step 1210 is transmitted to the accounting server 12. The accounting server 12 having received the terminal identifier recognizes the terminal identifier (Step 1215), and determines the identification of the mobile camera terminal 40. The upload counter of the mobile camera terminal 40 in the accounting database 14 is counted up (Step 1216).

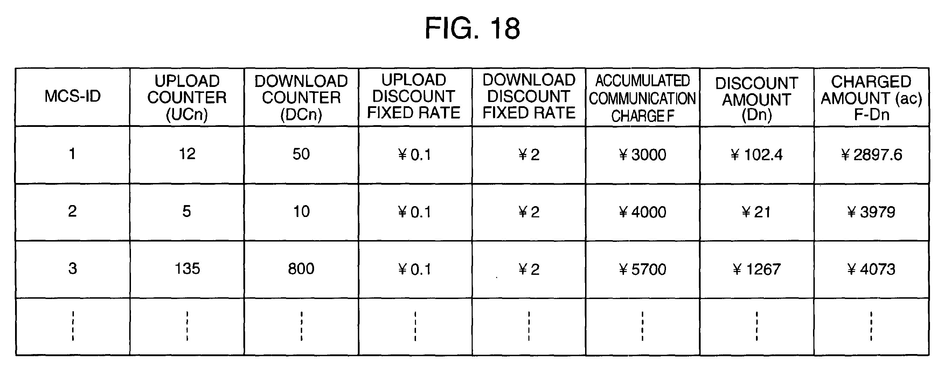

The data structure of the accounting database 14 may be assumed as shown in Fig. 18. That is, data such as an upload counter, a download counter, an upload discount fixed rate, a download discount fixed rate, an accumulated communication charge, a discount amount and a charged amount, are associated with one another using the terminal identifier ("MCS-ID") as key information. The upload counter is a counter counting up one whenever image information is uploaded, that is, stored.

In response to the increased count of the upload counter as described above, the accounting server 12 refers to the upload discount fixed rate and calculates the discount amount (Step 1217). For example, the upload discount fixed rate means an amount of discount per upload to be deducted from the communication charge of the mobile camera terminal 40 in question. By this processing, processing of discounting the accumulated communication charge to the user is executed (Step 1218).

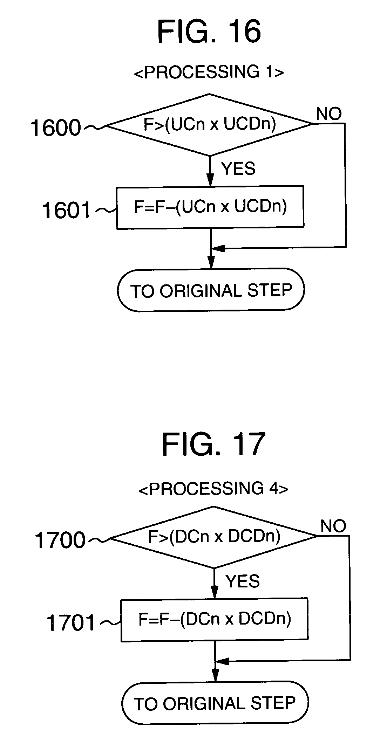

Specifically the procedure for executing the discount processing pursues the procedure of Processing 1 shown in Fig. 16. Description will be made on a mobile camera terminal 40 whose terminal identifier MCS-ID is "1" by way of example. Assume that the upload counter (UCn) and the upload discount fixed rate (UCDn) of the mobile camera terminal 40 indicate 12 and 0.1 yen, respectively. Further, assume that the accumulated communication charge F of the mobile camera terminal 40 is 3,000 yen. First, it is necessary to judge whether the accumulated communication charge F is larger than the discount amount. To this end, the accumulated communication charge (F) is compared with the product (UCnxUCDn) of the count of the upload counter and the upload discount fixed rate (Step 1600). When it is concluded that the accumulated communication charge is larger, discounting is performed in accordance with the processing "F-(UCnxUCDn)" (Step 1601). The processing is then returned to Step 1218 again.

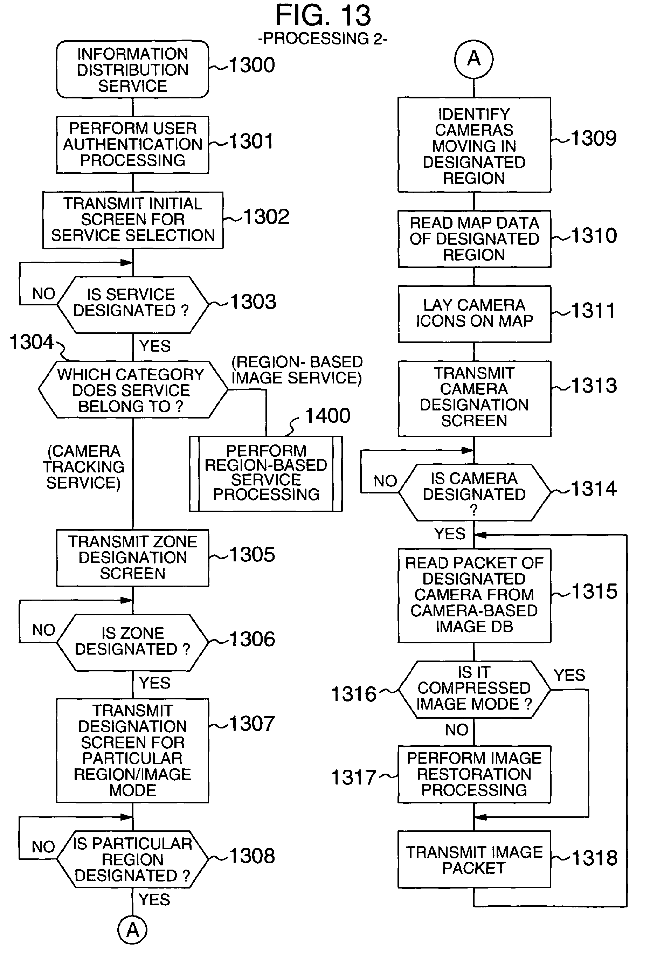

Fig. 13 is a flow chart showing an example of a procedure of Processing 2 (camera-designated information distribution service). To (a terminal of) a user who desires to gain access to the server 15 so as to browse and use the image information stored in the image database 13, the server 15 provides an information distribution service and distributes the image information. Description will be made below on the processing of discounting the accumulated communication charge, which processing is carried out in connection with the information distribution service.

First, the practical procedure adapted to the information distribution service will be described. When the image server 11 receives a request for using an information distribution service from a user terminal (Step 1300), the image server 11 performs user authentication processing, for example, accepting the input of a member ID and a password, and checking the member ID and the password in order to judge whether the user is a service member or not (Step 1301). When the user is authenticated properly, an initial screen for service selection is sent back to the user terminal subsequently.

When the service is designated (YES in Step 1303), the category the service belongs to is identified. When the service belongs to the category of a region-based image service for providing information of images picked up in a predetermined region, the processing goes to Step 1400 which will be described later. On the other hand, when the service belongs to the category of a camera tracking service for providing information of images picked up by a designated camera-including portable telephone 30 or a designated mobile camera terminal 40 or the like, a designation screen for designating the zone where the mobile camera terminals 40 or the like are present is transmitted for accepting the designation of the zone (Step 1305).

When the zone is designated (YES in Step 1306), a designation screen for designating a further particular region, accuracy of image information, or the like is transmitted (Step 1307). When a particular region is designated (YES in Step 1308), position information of mobile camera terminals 40 or the like present in the designated region is acquired, for example, using a position information service or the like through the camera-including portable telephone 30, so that the mobile camera terminals 40 or the like are specified (Step 1309).

The existence of the specified mobile camera terminals 40 or the like is presented by icon display or the like on map data of the designated region provided to the user terminal (Step 1310 and Step 1311). A designation screen for designating a mobile camera terminal 40 to acquire image information therefrom is transmitted (Step 1313). Packets of the image information of the mobile camera terminal 40 or the like designated on the screen are read from the camera-based image database 78 (Step 1314 and Step 1315). On the other hand, when there is no packet to be read on this occasion, it is preferable that an image pick-up request may be transmitted to the mobile camera terminal 40 or the like in order to acquire predetermined video image information.

When a packet is read, it is judged whether the packet is in a compressed image mode or not. When the packet is not compressed (NO in Step 1316), restoration processing is carried out (Step 1317). On the other hand, when the packet is compressed, the packet is transmitted to the user terminal directly (Step 1318).

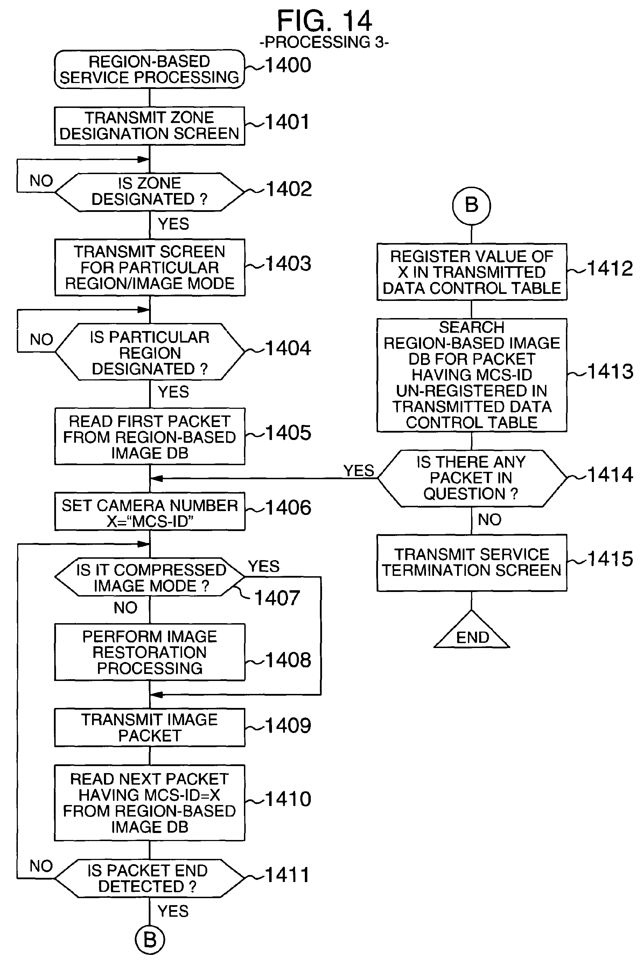

Fig. 14 is a flow chart showing an example of a procedure of Processing 3 (region-based information distribution service). Description will be made on the case where the region-based service processing is selected in Step 1304 (Step 1400). On this occasion, a designation screen for designating the zone where images were picked up as information is transmitted for accepting zone designation (Steps 1401 and 1402).

When the zone is designated (YES in Step 1402), a designation screen for designating a further particular region, accuracy of the image information or the like is transmitted (Step 1403). When a particular region is designated (YES in Step 1404), the first packet of the image information is read from the region-based image database 79 in accordance with the accepted designation (Step 1405).

On the other hand, when there is no packet to be read on this occasion, preferably, predetermined video image information may be acquired by designating a mobile camera terminal 40 or the like existing in the region in question in the same manner as described above, and transmitting an image pick-up request to the mobile camera terminal 40 or the like.

A terminal identifier (camera number X=MCS-ID in the drawing) is extracted from the read packet (Step 1406). When the packet is read, it is judged whether the packet is in a compressed image mode or not. When the packet is not compressed (NO in Step 1407), restoration processing is carried out (Step 1408). On the other hand, when the packet is compressed, the packet is transmitted to the user terminal directly (Step 1409).

Further, a next packet associated with the same terminal identifier is read from the region-based image database 79 on the basis of the extracted terminal identifier (Step 1410). Such a series of reading processing is repeated until the reading is completed after judgment as to whether reading the packets constituting the predetermined image information is completed or not (Step 1411) is made.

When all the series of packets are read and transmitted (YES in Step 1411), the aforementioned terminal identifier is registered in a table for controlling the transmitted data (Step 1412), while the region-based image database 79 is searched for the existence of a packet having an unregistered terminal identifier (Step 1413). When such a packet is found here (YES in Step 1414), the packet is submitted to the aforementioned packet reading processing. On the other hand, when such a packet is not found, a service termination screen is transmitted and processing is terminated (Step 1415).

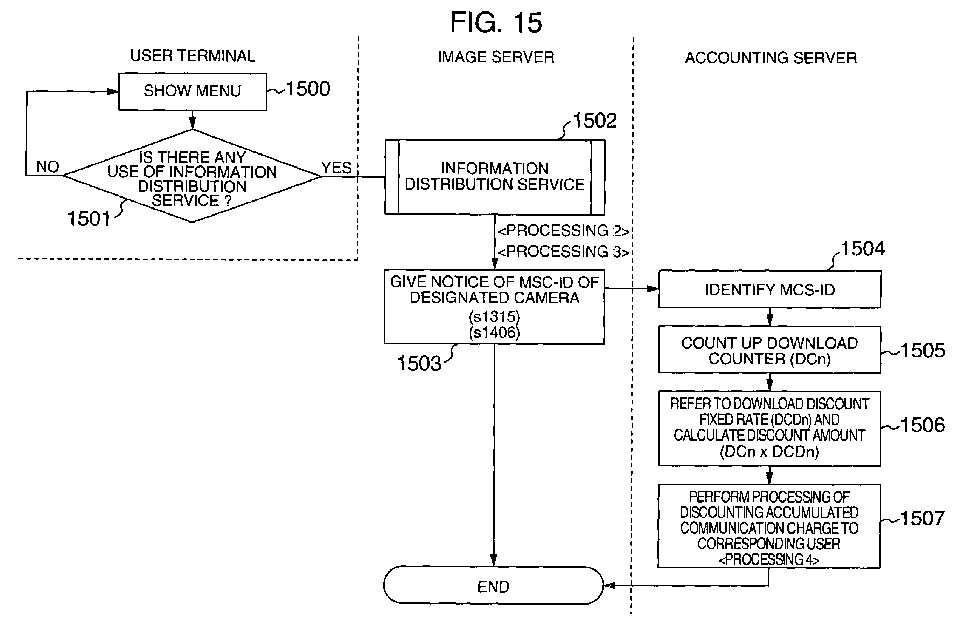

Fig. 15 is a flow chart showing Example 2 of the practical procedure of the image information controlling method. With the aforementioned information distribution service carried out thus, there occurs a context that image information in the image database 13 is used. Accordingly, whenever image information is downloaded to any user terminal (Step 1500 and YES in Step 1501), the discount processing in accordance with the context of use is applied to the provider of the image information.

In this case, the image server 11 provides the information distribution service (Step 1502) and executes Processing 2 and Processing 3 described in connection with Fig. 13 and Fig. 14 respectively. At this time, in accordance with Step 1315 in Processing 2 and Step 1406 in Processing 3, the image server 11 gives a notice of the terminal identifier associated with the used image information to the accounting server 12 (Step 1503). That is, here, the image server 11 gives a notice as to which mobile camera terminal 40 or which camera-including portable telephone 30 should be subject to the discount processing of the accumulated communication charge.

The accounting server 12 recognizes the terminal identifier (Step 1504), and identifies the mobile camera terminal 40 or the like. The download counter of the mobile camera terminal 40 in the accounting database 14 is counted up (Step 1505).

The data structure of the accounting database 14 can be assumed as shown in Fig. 18, as described above. The download counter means a counter counting up one whenever image information is downloaded or used by any other person.

In response to the count of the download counter increased thus, the accounting server 12 refers to the download discount fixed rate and calculates a discount amount (Step 1506). The download discount fixed rate is, for example, an amount per download to be deducted from the communication charge of the mobile camera terminal 40 in question. By this processing, the discount processing of the accumulated communication charge to the user is carried out (Step 1507).

Specifically the procedure of performing the discount processing pursues the procedure of Processing 4 shown in Fig. 17. Description will be made on a mobile camera terminal 40 whose terminal identifier MCS-ID is "1" by way of example. Assume that the download counter (DCn) and the download discount fixed rate (DCDn) of the mobile camera terminal 40 indicate 50 and 2 yen respectively. Further, assume that the accumulated communication charge F of the mobile camera terminal 40 is 3,000 yen. First, it is necessary to judge whether the accumulated communication charge F is larger than the discount amount. To this end, the accumulated communication charge (F) is compared with the product (DCnxDCDn) of the count of the download counter and the download discount fixed rate (step 1700). When it is concluded that the accumulated communication charge is larger, discounting is performed in accordance with the processing "F-(DCn×DCDn)" (Step 1701). The processing is then returned to Step 1507 again.

As described above, a profit of discounting the communication charge is brought to the image information provider both when the provider stores image information and when any other person downloads and uses the image information. Hence, the motivation of a person carrying a camera-including portable telephone 30 or the like with himself/herself to provide an image is enhanced. Accordingly, high-quality image information can be collected easily and promptly.

Incidentally, the discount rate may be adjusted in accordance with a storage operation attribute such as time or communication cost required for storing the image information, or a carrier attribute of a portable terminal such as a camera-including portable telephone 30 or a mobile camera terminal 40. On this occasion, for example, image information requiring long storage time may be regarded as image information large in size and rich in content, resulting in making the information distribution service per se more attractive. Thus, the discount rate is increased for such image information. On the other hand, the carrier of a camera-including portable telephone 30 can be identified if the server 15 recognizes the telephone number of the camera-including portable telephone 30. When the identified carrier is identical to a carrier involved in the operation of the information distribution service, the communication charge of the carrier is increased. Thus, the discount rate is increased for such a carrier. In such a manner, various factors related to image information can be taken into consideration and adopted as components to be connected with the discounting.

According to the embodiment of the present invention, the following effects can be obtained.

In the image information controlling method or the like according to the present invention, a business method for collecting image information broadly from the public and using the image information as distribution contents is feasible. Accordingly, a system for paying an information provision fee or granting some reward to an image provider who has provided the image information can be established so as to facilitate collection of image contents necessary for a service for distributing image information or the like.

Although specific description has been given based on the embodiment of the present invention, the invention is not limited thereto. Various changes can be made without departing from the scope and spirit of the invention.

According to the present invention, image information can be collected easily and efficiently.

## Claims

1. An image information controlling method for acquiring image information (65) from each of portable terminals (30, 40) and controlling said image information (65) by a server (15), wherein said server (15) executes the steps of:
receiving said image information (65) from each of said portable terminals (30, 40), said image information (65) being associated with an image pick-up attribute including information of at least a terminal identifier (62) selected from the group consisting of an image pick-up position (63), a time (64) and said terminal identifier (62) (Step 1202);
storing said received image information (65) in an image database (13) (Step 1211, Step 1214);
recording a frequency of storage of said image information (65) or a context of use of said image information (65) by others in a use context database (13, 14); and
reducing a use amount of each of said portable terminals (30, 40), which are sources of said image information (65), in accordance with said frequency of storage or said context of use in said use context database (13, 14) (Step 1218, Step 1507, Step 1601, Step 1701).

2. An image information controlling method according to Claim 1,
wherein said step of reducing said use amount of each of said portable terminals (30, 40) (Step 1218, Step 1507, Step 1601, Step 1701) further includes the sub-steps of:
acquiring accounting information of each of said portable terminals (30, 40) from an accounting database (14) for storing accounting information by portable terminal (30, 40); and
comparing said use amount included in said acquired accounting information with a reduction amount to be deducted from said use amount (Step 1600, Step 1700); and
wherein in said step of reducing said use amount (Step 1218, Step 1507, Step 1601, Step 1701), said reduction amount is applied to be deducted from said use amount when said use amount of each of said portable terminals (30, 40) is larger than said reduction amount as a result of said comparison.

3. An image information controlling method according to Claim 1, wherein electronic money or points are granted to each of said portable terminals (30, 40) in the step of reducing said use amount (Step 1218, Step 1507, Step 1601, Step 1701).

4. An image information controlling method according to Claim 1, further comprising the step of:
recording a storage operation attribute including either time or communication cost required for storing said image information (65), or a carrier attribute of each of said portable terminals (30, 40) in said use context database (13, 14);
wherein said use amount of each of said portable terminals (30, 40), which are sources of said image information (65), is reduced in accordance with said storage operation attribute or said carrier attribute in said use context database (13, 14) in the step of reducing said use amount (Step 1218, Step 1507, Step 1601, Step 1701).

5. An image information controlling method according to Claim 1, further comprising the steps of:
acquiring information of portable terminals (30, 40) present in image pick-up positions proper to an image pick-up attribute in accordance with an image pick-up request from a user including designation of said image pick-up attribute on the basis of a service of acquiring position information of said portable terminals (30, 40) (Step 1309);
designating a portable terminal (30, 40) proper to said image pick-up attribute on the basis of said acquired information and transmitting an image pick-up request to said portable terminal (30, 40) (Step 1309),
receiving image information (65) sent back from said portable terminal (30, 40) in response to said image pick-up request and storing said image information (65) in said image database (13); and
providing said image information (65) to a terminal of said user (Step 1308).

6. An image information controlling system (10) for acquiring image information (65) from each of portable terminals (30, 40) and controlling said image information (65), comprising:
means (11) for receiving said image information (65) from each of said portable terminals (30, 40), said image information (65) being associated with an image pick-up attribute including information of at least a terminal identifier (62) selected from the group consisting of an image pick-up position (63), a time (64) and said terminal identifier (62);
means (11) for storing said received image information (65) in an image database (13);
means (11, 12) for recording a frequency of storage of said image information (65) or a context of use of said image information (65) by others in a use context database (13, 14); and
means (12) for reducing a use amount of each of said portable terminals (30, 40), which are sources of said image information (65), in accordance with said frequency of storage or said context of use in said use context database (13, 14).

7. An image information controlling system (10) according to Claim 6,
wherein said means (12) for reducing said use amount of each of said portable terminals (30, 40) further includes:
means (12) for acquiring accounting information of each of said portable terminals (30, 40) from an accounting database (14) for storing accounting information by portable terminal (30, 40); and
means (12) for comparing said use amount included in said acquired accounting information with a reduction amount to be deducted from said use amount; and
wherein when said use amount of each of said portable terminals (30, 40) is larger than said reduction amount as a result of said comparison, said means (12) for reducing said use amount applies said reduction amount to said use amount so that said reduction amount is deducted from said use amount.

8. An image information controlling system (10) according to Claim 6, wherein said means (12) for reducing said use amount grants electronic money or points to each of said portable terminals (30, 40).

9. An image information controlling system (10) according to Claim 6, further comprising:
means (12) for recording a storage operation attribute including either time or communication cost required for storing said image information (65), or a carrier attribute of each of said portable terminals (30, 40) in said use context database (13, 14);
wherein said means (12) for reducing said use amount reduces said use amount of each of said portable terminals (30, 40), which are sources of said image information (65), in accordance with said storage operation attribute or said carrier attribute in said use context database (13, 14).

10. An image information controlling system (10) according to Claim 6, further comprising:
means (11) for acquiring information of portable terminals (30, 40) present in image pick-up positions proper to an image pick-up attribute in response to an image pick-up request from a user including designation of said image pick-up attribute on the basis of a service of acquiring position information of said portable terminals (30, 40);
means (11) for designating a portable terminal (30, 40) proper to said image pick-up attribute on the basis of said acquired information and transmitting an image pick-up request to said designated portable terminal (30, 40);
means (11) for receiving image information (65) sent back from said portable terminal (30, 40) in response to said image pick-up request, and storing said image information (65) in said image database (13); and
means (11) for providing said image information (65) to a terminal of said user.

11. A program product having a program stored for making a computer (15) execute a method of acquiring image information (65) from each of portable terminals (30, 40) and controlling said image information (65), wherein said computer (15) is made to execute the steps of:
receiving said image information (65) from each of said portable terminals (30, 40), said image information (65) being associated with an image pick-up attribute including information of at least a terminal identifier (62) selected from the group consisting of an image pick-up position (63), a time (64) and said terminal identifier (62) (Step 1202);
storing said received image information (65) in an image database (13) (Step 1211, Step 1214);
recording a frequency of storage of said image information (65) or a context of use of said image information (65) by others in a use context database (13, 14); and
reducing a use amount of each of said portable terminals (30, 40), which are sources of said image information (65), in accordance with said frequency of storage or said context of use in said use context database (13, 14) (Step 1218, Step 1507, Step 1601, Step 1701).
